# EUROPEAN PATENT APPLICATION

(11) **EP 4 570 400 A1**
(43) Date of publication of application: **18.06.2025**
(21) Application number: 23215640.6
(22) Date of filing: 11.12.2023
(51) Int. Cl.: B21J 15/32, B23P 19/00, B65G 1/02, B23K 9/20, B25B 23/04

(54) **FEEDING UNIT AND COUPLING BODY OF A FEEDING UNIT COMPRISING A LOCKING ELEMENT**

(71) Applicant: Newfrey LLC, New Britain, CT 06053 (US)
(72) Inventor: KOHLSTÄDT, Timo, 35394 Gießen (DE); LIPPERT, Stefan, 35394 Gießen (DE); TRIPP, Andreas, 35394 Gießen (DE); MEIER, Michael, 35394 Gießen (DE)
(74) Representative: SBD IPAdmin

(57) **Abstract**

Feeding unit (16) for feeding fasteners from a first element to a second element comprising a feeding hose (20) having an inlet and an outlet, and a coupling body (22) arranged at the outlet of the feeding hose. The coupling body comprises a locking element (48) movable between a locking position and an open position, wherein in the locking position the locking element protrudes into the coupling channel, and wherein in the open position the second end is freely accessible from the coupling channel (34).

## Description

The present invention relates to a feeding unit adapted to feed at least one fastener from a first element to a second element, and for instance from a magazine to a processing device, in particular a stud feeding device for a stud welding machine or a rivet feeding device for a riveting machine. More particularly, the present invention relates to improved safety aspects of fastener delivery to and around a processing device, such that a fastening machine, making possible the connection/disconnection of parts of the feeding unit without fasteners being able to come out in a disconnected state.

The term "fastener" is used herein to include rivets, screws, weld studs and other types of fastening devices.

Conventionally fasteners such as rivets or studs are presented to a fastening machine in loose form (e.g. they are delivered to the site in a bag which is severed and unloaded into a hopper or a magazine or a fastener sorting device of the machine). The fasteners are extracted singly from the hopper or magazine and delivered to a setting tool or welding tool or more generally to a processing tool attached for instance to an industrial robot via a feeding hose. Generally the feeding hose is a pressurised delivery tube in which the fastener is propelled by, for example, pressurized air. A receiver is arranged at the end of the feeding hose. In case of rivets, notably self-piercing rivets, the rivet is typically transferred to a retaining device for holding the rivet in alignment with a rivet delivery passage of the setting tool. When the rivet is in this position a punch goes down along the rivet delivery passage and drives the rivet into the workpiece so that it is deformed by an upsetting die disposed below the workpiece. For weld studs, a stud holder holds the stud and drives it in contact with the workpiece. An electrical current flow is established between the weld stud and the workpiece, the weld stud being raised above the workpiece so that an arc is generated between said components. The arc causes the opposite joining surfaces of the workpiece and the weld stud to melt. The weld stud is then lowered onto the workpiece so that the electrical joining current is short-circuited. The entire molten mass solidifies and the joining process is complete.

As the industrial robot operates in a freely movable manner in space and the magazine (or fastener sorting machine or hopper) is often arranged outside the range of movement of the industrial robot, the fasteners must be guided from the magazine to the processing tool via long, movable feeding hoses. Feed lengths of several meters are not uncommon. For this, the feeding hoses must be connected to the magazine and the processing tool. Because of the mobility of the industrial robot and the compressed air transport of the fasteners inside the feeding hoses, the latter are at risk of cracking. The risk of cracking occurs not only in feeding hose from a magazine, but in any feeding hose from a first element of the fastening machine to a second element of a fastening machine.

In the case of damage to a feeding hose it must be replaced. Notably during maintenance or uncontrolled or unplanned issue, there is a need to ensure that the fasteners in the feeding hose do not fly out of the feeding system uncontrollably and/or injure someone.

To prevent the studs from shooting out when the feeding hoses are disconnected, several devices exist.

DE19532937C1 discloses a device for feeding small parts to be processed in a device with a feeding hose and a measuring device provided for monitoring the proper condition and/or the correct connection of the feeding hose.

EP1268112B1 discloses a stud discharge device for feeding studs or pins arranged one behind the other through a channel to a stud welding device by means of pressurized air, the stud discharge device having a bearing element with a mounting opening which is coaxial with the channel and which is provided for receiving a delivery bush or a feed tube. At least one secondary channel, which leads to the mounting opening and which can be closed at the end by the delivery bush or by the feed tube, is assigned to an air supply line connected to the channel.

EP3833901A1 discloses a joining element feeding unit with a connector coupling which has a connector plug and a connector socket. By pushing the connector plug into the connector socket they can be transferred reversibly from a disconnected state into a state in which they are connected to each other.

However, there is a constant need to improve such systems to make them safer and more reliable.

Indeed, the known systems are all complex to implement, with either an additional hose, a complex mechanical arrangement, additional sensing unit and measurement system or even sometimes with an additional pressurized air source. This results in additional costs, loss of compacity of the entire assembly or long maintenance cycles.

To mitigate these drawbacks, the present invention aims to provide a feeding unit according to claim 1 and a coupling unit according to claim 12 which are easy to implement and reliable.

More particularly, the present disclosure is directed to a feeding unit adapted to feed at least one fastener from a first element to a second element, and notable from a magazine to a receiver of a processing device. The feeding unit for feeding fasteners comprises a feeding hose having an inlet and an outlet, a coupling body arranged at the outlet of the feeding hose and a receiver. The coupling body comprises a first end connected to the outlet of the feeding hose, a second end, and a coupling channel extending between the first and the second end. The coupling body has a locking element movable between a locking position and an open position, wherein in the locking position the locking element protrudes into the coupling channel, and wherein in the open position the second end is freely accessible from the coupling channel. In other words, a fastener can be freely transported from the first to the second end and can freely exit the second end of the coupling body. The receiver is removably connectable to the second end. In a connected state of the receiver with the second end of the coupling body, the locking element is forced in the open position, and in the disconnected state of the receiver with the second end, the locking element is forced in the locking position. The coupling body comprises a coupling housing and a coupling cover, and the locking element is arranged on the coupling cover.

The locking element prevents uncontrolled flying out of fasteners in a disassembled or disconnected state of the feeding hose with the receiver. The presence of the locking element on a coupling cover of a coupling body allows the locking element to be easily replaced or retrofitted on existing couplings without a safety lock. Thus, the modularity of the feeding unit is improved. The locking element is easy to implement, is not space-consuming and is reliable.

In an embodiment, the coupling body has an L-shape with a first section, a second section, and an intermediate section extending between the first and second sections, wherein the first section is orthogonal to the second section. Thus, the coupling body forms a 90-degrees coupling at the feeding hose outlet.

In an embodiment, the locking element is elastically movable from the open position to the locking position. More particularly the locking position is a stable position and the locking element is moved to the open position only if an external force is applied to it.

In an embodiment, the locking element comprises a safety latch connected to a pressure spring, wherein the safety latch is directly connected to the coupling cover. The mechanical locking element is robust, reliable and easy to implement without substantially impacting the weight of the system, with an automatic elastic return in its stable position, which is the locking position.

In an embodiment, the coupling cover comprises a slit and the safety latch is elastically movable into the slit. The safety latch can thus easily be retracted within the slit in the open position to avoid disturbing the path or course of the fastener.

In an embodiment, the safety latch is rotatably movably connected to the coupling cover. The rotation is easily implemented with a pin.

In an embodiment, the coupling housing comprises a slot, and the coupling cover is arranged in the slot and is removably connected to the coupling housing. In an embodiment, the coupling cover is screwed to the coupling housing. Thus, it can easily be unscrewed and repaired and/or replaced.

In an embodiment, the receiver comprises a receiving segment for its connection to the coupling body, and wherein in the connected state of the receiver to the second end of the coupling body, the receiving segment forces the locking element in the open position. The locking element is forced in its open position upon connection of the coupling body with the receiver.

In an embodiment, the receiving segment is formed by a sleeve and the internal surface of the sleeve comprises a sectional restriction. The sectional restriction of cross-sectional restriction is for instance formed by a step and forces the latch upon insertion of the coupling body within the receiver in its open position.

In an embodiment, the safety latch comprises a sloped surface cooperating with the sectional restriction to force the locking element into its open position. The sloped surface allows a smooth insertion and connection, preventing the risk of unwanted mechanical abutments, ...

The present disclosure is also directed to a coupling body, notably of a feeding unit, as disclosed above, the coupling body having:
- a first end,
- a second end, and
- a coupling channel extending between the first and the second end and adapted to receive a fastener.

The coupling body comprises a locking element movable between a locking position and an open position, wherein in the locking position the locking element protrudes into the coupling channel, wherein in the open position the second end is freely accessible from the coupling channel, and wherein the coupling body comprises a coupling housing and a coupling cover, and the locking element is arranged on the coupling cover.

The locking element forms a safety system and is moved in the locking position as soon as a disassembly occurs between the receiver and the feeding hose. Thus, the fastener cannot exit the coupling if said coupling is disconnected from the receiver, preventing uncontrolled flying out of fasteners or bolt.

In an embodiment, the locking element comprises a safety latch, wherein the coupling cover comprises a slit and the safety latch is elastically retractable within the slit. The system remains compact.

In an embodiment, the locking position is a stable position. No need to manually force the locking element into the locking position during a disconnection or disassembly.

It is understood that the features mentioned above and those yet to be explained below can be used not only in the respective combinations indicated, but also in other combinations or in isolation, without leaving the context of the present invention.

The invention and its advantages will be better understood from the reading of the following description, given by way of example only and with reference to the accompanying drawings, of which:
Fig. 1 schematically shows a processing machine, for instance a fastening machine with a magazine, a feeding unit according to the invention and a fastening device;
Fig. 2 shows in more details a receiver and a coupling body of the feeding unit of Fig. 1;
Fig. 3 shows the coupling body of Fig. 2 with a coupling housing and a coupling cover;
Fig. 4A to Fig. 4C show three disassembling steps to disassemble the coupling cover from the coupling housing of Fig. 3;
Fig. 5 shows in more detail the coupling cover of Fig. 3 with a locking element;
Fig. 6A to Fig. 6B schematically show in cross-section the receiver and coupling body of Fig. 2 in a disconnected state (corresponding to Fig. 6A), in a pre-mounted state (corresponding to Fig. 6B) and in a connected state (Fig. 6C).

The embodiments of the disclosure will be best understood by reference to the drawings, wherein the same reference signs designate identical or similar elements.

It will be readily understood that the components of the disclosed embodiments, as generally described and illustrated in the figures herein, could be arranged and designed in a wide variety of different configurations. Thus, the following detailed description of the embodiments of the systems and methods of the disclosure is not intended to limit the scope of the disclosure, as claimed, but is merely representative of possible embodiments of the disclosure.

In some cases, well-known features, structures, or operations are not shown or described in detail. It will also be readily understood that the components of the embodiments, as generally described and illustrated in the figures herein, could be arranged and designed in a wide variety of different configurations.

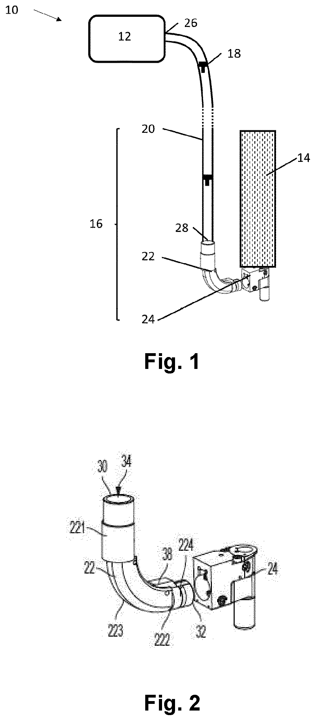

Fig. 1 schematically shows a processing machine, notably a fastening system 10 with a first element, for instance a magazine 12, a fastening device 14 and a feeding unit 16.

The first element (depicted as a magazine 12 in Fig. 1) is a mechanical part adapted to receive for instance a plurality of fasteners 18 before being extracted (singly extracted for example) to the feeding unit 16. The first element may be a magazine 12, a hopper or any similar part adapted to receive at least one fastener before transferring it to a feeding hose.

The feeding unit 16 comprises a feeding hose 20, a coupling body 22 and a second element which forms a receiver 24. The coupling body 22 and the receiver 24 are notably depicted in Fig. 2. The feeding hose 20 comprises an inlet 26 adapted to be connected (directly or not) to the magazine and an outlet 28 adapted to be (indirectly) connected to the receiver 24. The feeding hose 20 is adapted to transfer fasteners 18 (notably isolated fasteners 18) from the first element or magazine 12 to the second element or receiver 24. The transfer of the fasteners from the inlet to the outlet occurs for instance by means of compressed air. However, alternatively, or additionally it could occur also by gravity or other medium or arrangements. The feeding hose 20 is directly connected to the coupling body 22. More particularly the outlet 28 of the feeding hose 20 is connected to the coupling body 22. The assembly of the outlet 28 to the coupling body 22 may be realized by a press fit or a snap fit connection. Other methods (gluing, welding, ....) may also be used to connect the outlet to the coupling body 22.

The coupling body 22 extends between the feeding hose 20 and the receiver 24. The coupling body 22 comprises a first end 30 connected to the outlet 28 of the feeding hose 20.

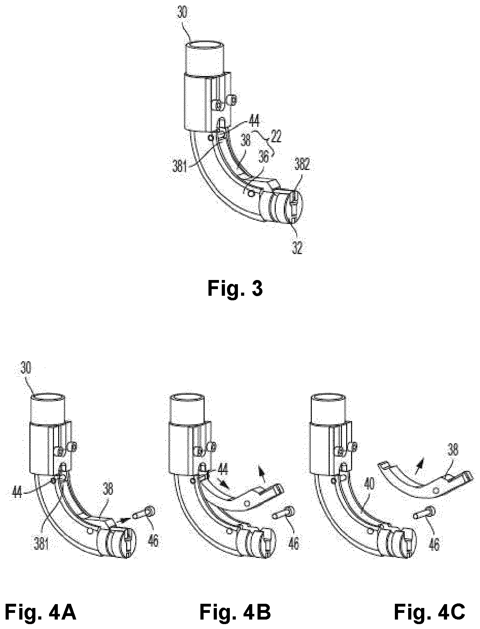

The coupling body 22, as notably visible in Fig. 2 or Fig. 3, comprises a second end 32, adapted to be coupled to the receiver 24. A coupling channel 34 extends between the first and the second end 28, 30. The coupling channel 34 connects the first end 30 to the second end 34. The coupling channel 34 is adapted to receive a fastener 18 to be transported from the first end 30 to the second end 32. The coupling body 22 is L-shaped for instance, with a first section 221, a second section 222, and an intermediate section 223 extending between the first and the second sections 221, 222. The first section 221 is orthogonal to the second section 222. The coupling body 22 forms 90 degrees coupling. The second end 32 may comprise a cross-sectional restriction 224 for the coupling of the coupling body with the receiver, as disclosed below. The restriction 224 allows the formation of a mechanical stop for the correct connection of the receiver 24 to the coupling body 22.

The coupling body 22 comprises a coupling housing 36 and a coupling cover 38. The coupling cover 38 is mounted on the coupling housing 36. More particularly, the coupling cover 38 is removably mounted on the coupling housing 36. For instance, the coupling housing 36 comprises a slot 40 in the vicinity of the second end 32. More particularly, as visible in Fig. 2, Fig. 3, or Fig. 4A, the slot 40 is open at the second end 32. The coupling cover 38 is adapted to be arranged within the slot 40 such as to close the coupling housing 36. The coupling cover 38 is for instance removably fixed to the coupling housing 36. The coupling cover 38 is for instance screwed to the coupling housing 36. The coupling cover 38 is complementary in shape to the coupling housing 36, such that the coupling channel 42 is not affected by the fact that the coupling body 22 is a two-parts element. The coupling cover 38 for instance has a first end 381 adapted to be fixed to the end of the slot 40. The end of the slot 40 is in the vicinity of the first section 221. For instance, at the interface between the first section 221 and the intermediate section 223. The first end 381 of the coupling cover 38 is mounted to the first section 221, for example with a pin 44. The second end 382 of the coupling cover 38 is mounted to the second section 222. For instance, the second end 382 is fixed to the second section 222 and/or the intermediate section 223 by a screw 46. As depicted in Fig. 4A to Fig. 4C, the coupling cover 38 may be dismounted from the coupling housing 36 as follows.

In a first step (see Fig. 4A), the screw 46 at the second end 382 is removed. In a second step (see Fig. 4B), the first end 381 is disengaged from the pin. In a third step, the coupling cover 38 is removed entirely from the coupling housing 36, such that the slot is open (see Fig. 4C).

The coupling body 22 comprises further a locking element 48 movable between a locking position and an open position. In the locking position, the locking element 48 prevents a fastener 18 to exit the second end 32. In the open position, a fastener 18 can freely pass through the coupling channel 34 and exit the second end 32. More particularly, in the locking position, the locking element 48 protrudes into the coupling channel 34, preventing a fastener 18 to continue its path. In the open position, the locking element 48 does not protrude into the coupling channel 34 and the fastener 18 can freely move and exits the coupling body 22. The locking element 48 is elastically forced in the locking position. The locking position is thus a stable position. In other words, in the absence of external force applied to the locking element 48, the locking element elastically remains in the locking position. The locking element 48 is moved in the open position when an external force is applied on said locking element 48.

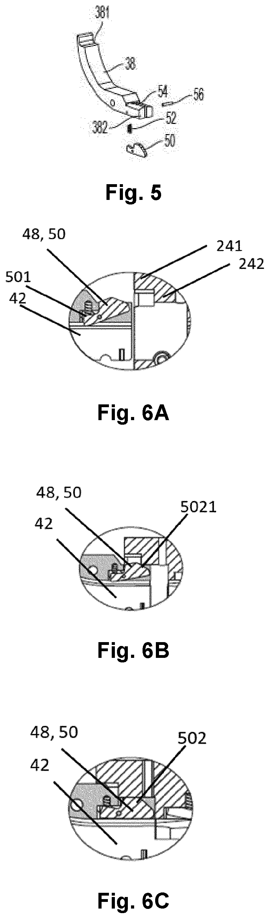

As better seen in Fig. 2 or Fig. 5, the locking element 48 comprises a safety latch 50 and a pressure spring 52. The pressure spring 52 forces the safety latch 50 in the locking position. The safety latch 50 is thus elastically movable between a position corresponding to the locking position, in which said safety latch 50 protrudes into the coupling channel 34 and an open position in which it does not. The coupling cover 38 comprises a slit 54. The slit 54 is at the vicinity of the second end 382. The slit 54 is adapted to receive the safety latch 50, notably in the open position, so that the safety latch 50 does not protrude in the coupling channel 34. The safety latch 50 is elastically movable into the slit 54. Fig. 5 shows in more details the safety latch 50, the coupling cover 38 and the pressure spring 52. The safety latch 50 is rotatably mounted on the coupling cover 38. For instance, a shaft 56 connects the safety latch 50 to the coupling cover 38. The safety latch 50 comprises a first portion 501 and a second portion 502, the shaft 56 being arranged between the first and the second portions. The shaft 56 defines a rotatory axis of the safety latch 50. The pressure spring 52 applies an effort on the first portion such that the first portion extends in the coupling channel in the locking position. The second portion 502 is adapted to engage with the receiver 24. The second portion 502 comprises a sloped surface 5021.

The receiver 24 may be a part of the fastening or processing device or may be a separated part. The receiver 24 may for instance be a fastener holder. More generally the receiver is a mechanical part adapted to receive a fastener. The receiver 24 is adapted to be removably connected, indirectly, to the feeding hose 20. The receiver is removably connected to the coupling body 22. The receiver 24 comprises for instance a receiving segment 241 destined to be removably mounted to the second end 32 of the coupling body 22. The receiving segment 241, as visible for instance in Fig. 6A to Fig. 6C, may be a sleeve. The sleeve has an internal surface adapted to face the or receive the second end of the coupling body 22. The internal surface is for instance provided with a sectional restriction 242. The sectional restriction 242 cooperates with the sloped surface 5021 for moving the safety latch 50 from the locking position to the open position during the engagement of the receiver 24 with the coupling body 22. The receiving segment 241 cooperates with the second end 32 of the coupling body 22 such that in the mounted position, the receiving segment 241 applies an effort on the safety latch 50 and forces it in the open position.

Fig. 6A, Fig. 6B and Fig. 6C show in more details the coupling of the coupling body with the receiver. In Fig. 6A, the receiver 24 and the coupling body 22 are in a disconnected state. The locking element is in the locking position, since no external force is applied to the safety latch, and fasteners 18 present in the coupling body 22 or in the feeding hose 20 cannot exit the coupling 22 through the second end 32. In Fig. 6B, the receiver 24 and the coupling body 22 are in a pre-mounted state. The receiver, and more particularly the receiving segment 241 of the receiver 24 applies an effort on the safety latch and the safety latch begins its rotation from the locking position to the open position. For instance, the restriction 242 abuts against the sloped surface and thus moves the safety latch. Fig. 6C shows the connected state, in which the receiver is fully engaged with the coupling body (for instance, the receiver 24 abuts the cross-sectional restriction 224), and the locking element is forced in the open position. A fastener 18 can freely move from the feeding hose to the coupling body 22, and further to the receiver, without having the safety latch preventing its course.
fastening system 10
a magazine 12
fastening device 14
feeding unit 16
fastener 18
feeding hose 20
coupling body 22
first section 221,
second section 222,
intermediate section 223
cross-sectional restriction 224
receiver 24
inlet 26
outlet 28
first end 30
second end 32
coupling channel 34
coupling housing 36
a coupling cover 38
first end 381
second end 382
slot 40
coupling channel 42
pin 44
screw 46
locking element 48
safety latch 50
first portion 501
second portion 502
sloped surface 5021
pressure spring 52
slit 54
shaft 56
receiving segment 241
sectional restriction 242

## Claims

1. Feeding unit (16) for feeding fasteners from a first element to a second element comprising:
- a feeding hose (20) having an inlet and an outlet,
- a coupling body (22) arranged at the outlet of the feeding hose, the coupling body having:
• a first end (31) connected to the outlet of the feeding hose,
• a second end (32), and
• a coupling channel (34) extending between the first and the second end,
the coupling body comprising a locking element (48) movable between a locking position and an open position, wherein in the locking position the locking element protrudes into the coupling channel, and wherein in the open position the second end is freely accessible from the coupling channel (34),
- a receiver (24) removably connectable to the second end (32), wherein in a connected state of the receiver with the second end (32) of the coupling body, the locking element (48) is forced in the open position, and wherein in the disconnected state of the receiver with the second end, the locking element (48) is forced in the locking position
**characterized in that** the coupling body (22) comprises a coupling housing (36) and a coupling cover (38), and the locking element (48) is arranged on the coupling cover (38).

2. Feeding unit (16) according to claim 1, wherein the coupling body (22) has an L-shape with a first section (221), a second section (222), and an intermediate section (223) extending between the first and second sections, wherein the first section is orthogonal to the second section.

3. Feeding unit (16) according to claim 1 or 2, wherein the locking element (48) is elastically movable from the open position to the locking position.

4. Feeding unit (16) according to any of claims 1 to 3, wherein the locking element (48) comprises a safety latch (50) connected to a pressure spring (52), wherein the safety latch (50) is directly connected to the coupling cover (38).

5. Feeding unit (16) according to claim 4, wherein the coupling cover (38) comprises a slit (54) and the safety latch (50) is elastically movable into the slit (54).

6. Feeding unit (16) according to claim 4 or 5, wherein the safety latch (50) is rotatably movably connected to the coupling cover (38).

7. Feeding unit (16) according to any of claims 1 to 6, wherein the coupling housing comprises a slot, and the coupling cover is arranged in the slot and is removably connected to the coupling housing.

8. Feeding unit (16) according to claim 7, wherein the coupling cover is screwed to the coupling housing.

9. Feeding unit (16) according to any of claims 1 to 8, wherein the receiver comprises a receiving segment for its connection to the coupling body, and wherein in the connected state of the receiver to the second end of the coupling body, the receiving segment forces the locking element in the open position.

10. Feeding unit (16) according to claim 9, wherein the receiving segment is formed by a sleeve and the internal surface of the sleeve comprises a sectional restriction.

11. Feeding unit (16) according to claim 10, wherein the safety latch comprises a sloped surface cooperating with the sectional restriction to force the locking element into its open position.

12. Coupling body (22), especially of a feeding unit (16) according to any of claims 1 to 10, having
a first end,
a second end, and
a coupling channel extending between the first and the second end and adapted to receive a fastener,
the coupling body comprising a locking element movable between a locking position and an open position, wherein in the locking position the locking element protrudes into the coupling channel, wherein in the open position the second end is freely accessible from the coupling channel,
wherein the coupling body comprises a coupling housing and a coupling cover, and the locking element is arranged on the coupling cover.

13. Coupling body (22) according to claim 12, wherein the locking element comprises a safety latch, wherein the coupling cover comprises a slit and the safety latch is elastically retractable within the slit.

14. Coupling body (22) according to claim 12 or 13, wherein the locking position is a stable position.
